# EUROPEAN PATENT SPECIFICATION

(11) **EP 1 097 297 B1**
(45) Date of publication and mention of the grant of the patent: **27.07.2005**
(21) Application number: 99911908.4
(22) Date of filing: 25.03.1999
(51) Int. Cl.: F01N 3/20

(54) **ENGINE EXHAUST SYSTEM**
ABGASSYSTEM FÜR BRENNKRAFTMASCHINEN
SYSTEME D'ECHAPPEMENT POUR MOTEUR

(30) Priority: 25.03.1998 GB 9806250
(43) Date of publication of application: 09.05.2001
(73) Proprietor: Ford Global Technologies, Inc., Dearborn, Michigan 48136 (US)
(72) Inventor: MA, Thomas, Tsoi, Hei, Chelmsford, Essex CM3 5YL (GB)
(74) Representative: Messulam, Alec Moses
(86) International application number: PCT/GB1999/000782
(87) International publication number: WO 1999/049189

(56) References cited:
- US-A- 4 091 616
- US-A- 4 924 672
- US-A- 5 272 874

## Description

### Field of the invention

The present invention relates to an exhaust system for an internal combustion engine having an after-treatment device.

### Background of the invention

It is desirable to position an after-treatment device, such as a catalytic converter or a gas storage trap, as near as possible to the engine in order that it should warm up rapidly and remain hot during low load operation. This however creates a problem in that the after-treatment device may be overheated during high load operation and may risk being permanently damaged.

It has been proposed in US-4,091,616 to place a catalytic converter of a diesel engine inside a cooling jacket and to provide an air gap to act as heat insulation.

### Object of the invention

The present invention seeks to provide an exhaust system that enables the exhaust gases to be cooled when the engine is operating under high load conditions before they reach an after-treatment device.

### Summary of the invention

According to the present invention, there is provided an exhaust system for an internal combustion engine, comprising a downpipe, at least one branch leading from an individual exhaust port of the engine to the downpipe, a gas storage reservoir also connected to the exhaust port, the size of the reservoir and the connection between the reservoir and the exhaust port being such as to catch and to store in the reservoir the major proportion of exhaust gases discharged from the exhaust port during the blowdown phase of each exhaust period when the engine exhaust valve associated with the exhaust port first opens, exhaust gases stored in the reservoir being subsequently returned to the downpipe at a later stage in the engine cycle, and means for extracting heat from the exhaust gases stored temporarily in the reservoir.

When the engine has a plurality of cylinders, and the exhaust system comprises an exhaust manifold having a plurality of branches each leading from an individual exhaust port of a respective one of the cylinders to the downpipe, it is possible to provide a single gas storage reservoir connected in common to all the exhaust ports, so that exhaust gases entering the reservoir from one exhaust port are subsequently returned to the downpipe through a branch of the manifold leading to another exhaust port.

It is alternatively possible in a multi-cylinder internal combustion engine to provide a plurality of storage reservoirs, each connected to a respective one of the exhaust ports, in which case exhaust gases entering each reservoir from the associated exhaust port will subsequently be returned to the downpipe through the branch of the manifold leading from the same exhaust port.

The invention in all its aspects is predicated on the realisation that the variation of the instantaneous exhaust pressure with time after an exhaust valve opens is strongly dependent upon the engine load. In particular, under high load, when the exhaust valve of a cylinder first opens, the burnt gases in the combustion chamber expand rapidly and a large proportion of the burnt charge bursts out suddenly into the exhaust system, causing a high pressure surge in the exhaust system that is herein referred to as blowdown.

At the end of this blowdown phase, the pressure in the combustion chamber is substantially equal to the pressure in the exhaust system and the remainder of the burnt charge in the combustion chamber is pushed out more slowly with piston displacement. At idling, on the other hand, there is little or no blowdown phase because the burnt charge in the combustion chamber can be fully expanded before the exhaust valve opens. Indeed there may even be a small negative surge that causes exhaust gases to be drawn back momentarily into the combustion chamber from the exhaust system. Once the pressures in the cylinder and the exhaust system have been equalised, the burnt charge is pushed out as previously by the displacement of the piston.

The proportion of the mass of exhaust gases contained in the blowdown pressure surge is load dependent, varying typically from 0 to 75% of the total exhaust flow. Thus, by extracting heat preferentially from the exhaust gases resulting from the blowdown pressure surge, the invention allows automatic load dependent cooling of the exhaust gases before they reach the after-treatment device.

Preferably, the means for extracting heat from the exhaust gases in the reservoir is a heat exchanger. The heat exchanger may transfer the exhaust heat to the ambient air but it is more efficient to transfer the heat to a liquid coolant circulating in a cooling system of the engine.

Ideally, no heat should be taken from the exhaust gases during idling and low load operation. To this end, it is desirable to isolate the reservoir thermally from the exhaust manifold, for example by the use of a heat insulating gasket, so that heat should not be lost by conduction from the manifold walls. This also has advantages in that the reservoir does not increase the warm-up time during cold starting of the engine, insofar as it does not contribute to the thermal capacity of the exhaust system.

To reduce heat loss during cold start, idling and low load operation still further, it is desirable to provide a valve to inhibit exhaust gases from entering the reservoir under such conditions. Such a valve may be a butterfly valve that is externally controlled, but to avoid the need for an external control system it is further preferred to design the valve as a flap valve that is normally closed and opens automatically as the pressure from the blowdown surges increases.

### Brief description of the drawings

The invention will now be described further, by way of example, with reference to the accompanying drawings, in which:
Figure 1 shows a schematic section through an engine fitted with an exhaust manifold having a reservoir common to all the engine cylinders,
Figure 2 is a detail of an alternative construction of the flap valve in Figure 1, and
Figure 3 shows a schematic section similar to that of Figure 1 of an alternative embodiment of the invention in which each engine cylinder has its own respective reservoir.

### Detailed description of the preferred embodiments

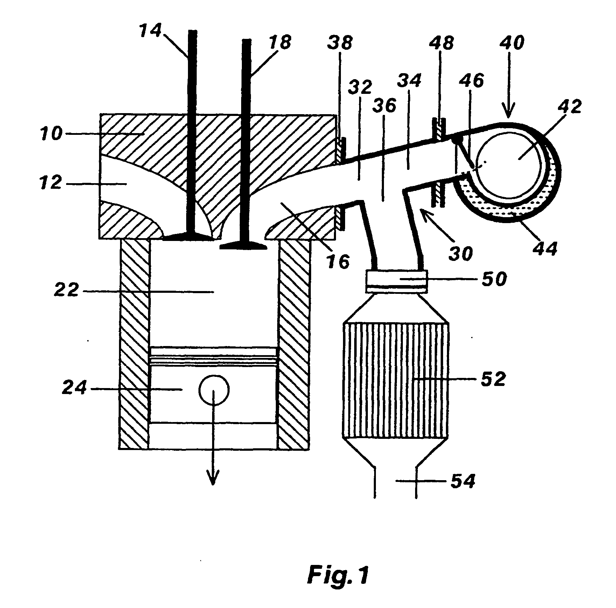

Figure 1 shows an engine having a cylinder head 10 with an intake port 12 and an exhaust port 16 controlled by an intake valve 14 and an exhaust valve 18 respectively. Each cylinder of the engine has a working chamber 22 defined by a reciprocating piston 24 which is shown in the drawing near the bottom of the expansion stroke when the exhaust valve 18 first opens. The engine has an exhaust manifold, generally designated 30, that comprises a plurality of branches 32 each leading from a respective one of the exhaust ports 16 through a respective connecting passage 36 to a common flange 50. A close-coupled catalytic converter 52 is mounted to the flange 50 and the treated gases are discharged from it through a downpipe 54.

As described so far, the engine is entirely conventional and, in the absence of further steps, the catalytic converter 52 could be overheated when the engine is operated under full load. This problem can be mitigated by moving the catalytic converter further away from the engine but then the light-off time of the converter would be increased during cold starts and the converter may not be sufficiently hot during low load operation.

The present invention seeks to provide progressive cooling of the exhaust gases such that they are subjected to maximum cooling under high load operation but to minimum cooling during cold starts and under low load conditions. Furthermore the preferred embodiment of the invention seeks to achieve this variable cooling of the exhaust gases without resorting to an external control system.

To this end, the engine in Figure 1 is additionally fitted with a reservoir 40 that comprises a common plenum chamber 42 surrounded by a cooling jacket 44 through which flows the liquid engine coolant. The plenum chamber 42 is connected by a respective connecting pipe 34 to each of the branches 32 of the exhaust manifold, the connecting pipes 34 being arranged in a straight line with the branches 32 of the manifold 30. A thermally insulating gasket 48 is arranged in the flange between the reservoir 40 and the manifold 30. A flap valve 46 is arranged in each connecting pipe 34 which is operated only by gravity.

Under high load operation, the pressure in the combustion chamber 22 when the piston 24 is in the position illustrated is significant higher than ambient pressure. For this reason as soon as the exhaust valve 18 opens, the major proportion of the mass of burnt gases will burst out into the exhaust port 16 causing a pressure surge carrying gases with high momentum. After the blowdown phase, the rest of the burnt charge remaining in the cylinder 22 will be pushed out at substantially ambient pressure by the upward displacement of the piston 24 during the exhaust stroke.

The momentum of the gases during the initial blowdown phase will tend to make the gases move in a straight line along the connecting pipe 34 into the plenum chamber 42 forcing open the flap valve 46 in the process. Because of the frequency of the blowdown pulses, the flap valve 46 will constantly remain partially open, its inertia preventing it from returning to a closed position between cycles. Thus, the gases that enter the plenum chamber 42 past the flap valve 46 of one cylinder will flow along the plenum chamber 42 and exit through the flap valves 46, the connecting pipes 34 and connecting passages 36 of cylinders having closed exhaust valves. During their passage through the plenum chamber 42, these gases will be cooled by the cooling jacket 44.

When the engine is idling, on the other hand, the pressure in the combustion chamber 22 is only comparable with the ambient pressure and may even be below it. When the exhaust valve 18 first opens, there will be no high pressure surge and all the burnt charge will be pushed out slowly at substantially ambient pressure by the displacement of the piston 24. The gases will not have sufficient momentum to open the flap valve 46 and will not enter the reservoir 40. Instead the gases discharged from each cylinder will pass by the shortest route to the catalytic converter 52, flowing only through its own respective connecting passage 36. Thus the gases would be subjected to no more cooling than in a conventional engine. The thermally insulating gasket 48 will serve to prevent the body of the exhaust manifold 30 from being cooled by the water jacket 44 and the flap valve 46 will prevent the gases from being cooled by the water jacket during such idling and low load operation.

During part load operation, the flap valve 46 will open by an intermediate amount depending upon the momentum of the gases discharged during the blowdown phase and accordingly there will be a progressive variation in the extent of cooling of the exhaust gases between the two extreme conditions described above.

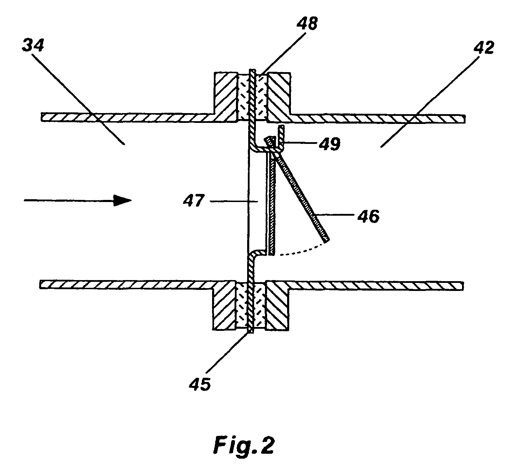

The flap valves 46 for the respective cylinders may be installed in a sub-assembly shown in Figure 2 comprising a spacer plate 45, clamped between the exhaust manifold 30 and the reservoir 40, the spacer plate 45 having openings 47 each connecting between a respective connecting pipe 34 and the plenum chamber 42, and support brackets 49 on which each of the flap valves 46 is suspended for free pivotal movement.

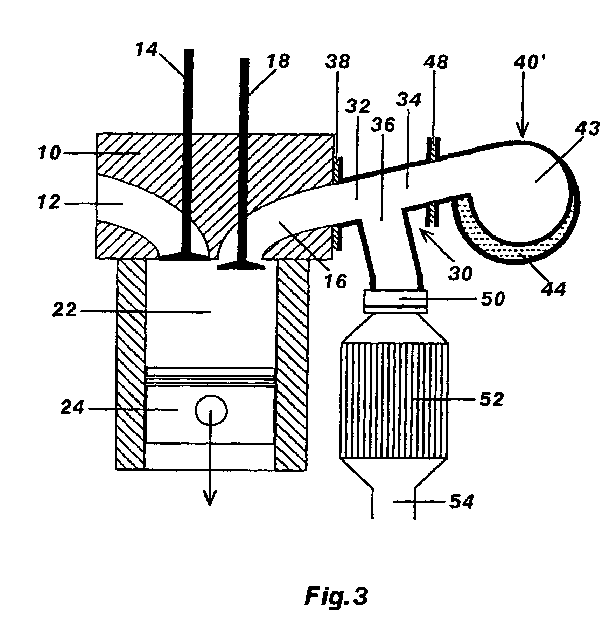

The embodiment of Figure 3 differs from that of Figure 1 in two major respects. First, in the reservoir assembly 40', each cylinder has its own storage chamber 43 that is not connected to the other cylinders. Second, the flap valves 46 have been omitted.

The operation of this embodiment is essentially similar to that previously described, the main difference being that after being stored and cooled in the storage chamber 43 during high load operation, the exhaust gases of the blowdown phase are returned only to the associated connecting passage 36 of the same cylinder to join with the exhaust gases of the piston displacement phase from the same cylinder.

Because each storage chamber 43 is a closed volume, the size of the chamber and the momentum of the blowdown pulse will determine the rate and the amplitude of the pressure build up within the chamber as well as the quantity of exhaust gases stored within the chamber.

If the volume of the storage chamber 43 is small, the pressure build up within the chamber will be rapid and will soon reach a high maximum value which limits further entry of exhaust gases into the chamber even during the blowdown phase and during the subsequent piston displacement phase. As a result, only a small proportion of the total burnt charge will be stored and cooled within the storage chamber 43.

If, on the other hand, the volume of the storage chamber 43 is large, the pressure build up within the chamber will be more gradual and will reach a lower maximum value at a later time. As a result, a large proportion of the total burnt charge, including most of the exhaust gases of the piston displacement phase, will enter the storage chamber 43.

Between the two extremes described above, it is possible to determine an optimum volume for the storage chamber 43 such that the pressure build up within the chamber will reach a maximum value near the end of each blowdown phase so that substantially all the exhaust gases of the blowdown phase are stored within the storage chamber 43, while the exhaust gases of the piston displacement phase are prevented from entering the chamber by the said pressure build up within the storage chamber 43. For a given volume of the storage chamber 43, the quantity of the stored exhaust gases will be solely a function of the maximum pressure reached within the chamber during each blowdown phase, and this will vary in dependence upon the momentum of the blowdown pulse which increases as the engine load is increased.

Thus in the present embodiment, progressive cooling of the exhaust gases is achieved automatically whereby a large proportion of the burnt charge is captured and cooled in the reservoir assembly 40' during high load operation, and a small proportion of the burnt charge is captured and cooled during low load operation.

To eliminate completely even the small amount of cooling during low load operation, an externally controlled butterfly valve may be provided to block the entry of exhaust gases into each storage chamber 43 entirely under certain operating condition, such as during cold starts. Alternatively, a flap valve similar to that in Figure 1 or 2 may be retained which is normally closed and opens automatically as the momentum of the blowdown pulses increases.

The cooling jacket 44 shown in the embodiments of Figures 1 and 3 may be connected in series with the coolant circuit of the engine, receiving coolant from the engine and delivering coolant to a thermostat which is re-located from its normal position in the engine to a new position downstream of the cooling jacket 44. In this case, the thermostat may be set at a higher than normal regulation temperature to take into account the additional increase in coolant temperature after passing through the water jacket 44.

A characteristics of the above coolant circuit with the cooling jacket 44 of the present embodiments is that the thermostat will respond to the cumulative coolant temperature and will increase the coolant circulation flow through the engine as more and more heat is transferred into the cooling jacket 44 from the exhaust gases. As a result, the engine operating temperature will be lower than the regulation temperature of the thermostat by differing amounts according to engine load, the engine running cooler at high loads and hotter at low loads. This has advantages in increasing engine volumetric efficiency and improving engine durability at high loads, and reducing fuel consumption and exhaust emissions at low loads, the variation in engine operating temperature being self-regulating as a function of engine load.

The close-coupled catalytic converter 52 shown in the embodiments of Figures 1 and 3 may contain gas storage materials for intercepting and storing pollutants, such as NOx, when the engine is operating with a lean fuel-to-air mixture and the catalytic converter alone is not effective in reducing the NOx because of excess air contained in the exhaust gases. Such a lean NOx trap cannot normally be close-coupled to the engine because of its relatively low temperature limit for durability, but in the present invention, the increasing effectiveness of cooling of the exhaust gases as the engine load is increased would ensure safe operation of the lean NOx trap, even if it is mounted close to the engine. This has advantages in that a combined catalyst and trap will have lower cost and occupy less space.

## Claims

1. An exhaust system of an internal combustion engine, comprising a downpipe (54), at least one branch (32) leading from an individual exhaust port (16) of the engine to the downpipe (54), **characterised by** a gas storage reservoir (40) also connected to the exhaust port (16), the size of the reservoir (40) and the connection between the reservoir (40) and the exhaust port (16) being such as to catch and to store in the reservoir (40) the major proportion of exhaust gases discharged from the exhaust port (16) during the blowdown phase of each exhaust period when the engine exhaust valve associated with the exhaust port first opens, exhaust gases stored in the reservoir being subsequently returned to the downpipe (54) at a later stage in the engine cycle, and means (44) for extracting heat from the exhaust gases stored temporarily in the reservoir (40).

2. An exhaust system of an internal combustion engine as claimed in claim 1, wherein the engine has a plurality of cylinders, and the exhaust system comprises an exhaust manifold (30) having a plurality of branches (36) each leading from an individual exhaust port (16) of a respective one of the cylinders to the downpipe (54), a single gas storage reservoir (40) being connected in common to all the exhaust ports, and exhaust gases entering the reservoir (40) from one exhaust port (16) being subsequently returned to the downpipe (54) through a branch of the manifold leading to another exhaust port (16).

3. An exhaust system of an internal combustion engine as claimed in claim 1, wherein the engine has a plurality of cylinders, and the exhaust system comprises an exhaust manifold (30) having a plurality of branches (36) each leading from an individual exhaust port (16) of a respective one of the cylinders to the downpipe (54), a plurality of storage reservoirs (40') being provided, each connected to a respective one of the exhaust ports (16), exhaust gases entering each reservoir (40') from the associated exhaust port being subsequently returned to the downpipe (54) through the branch (32) of the manifold leading from the same exhaust port (16).

4. An exhaust system as claimed in any preceding claim, wherein the means (44) for extracting heat from the exhaust gases in the reservoir is a heat exchanger.

5. An exhaust system as claimed in claim 4, wherein the heat exchanger is operative to transfer the heat to a liquid coolant circulating in a cooling system of the engine.

6. An exhaust system as claimed in any preceding claim, wherein means (48) are provided for thermally isolating the reservoir (40,40') from the exhaust manifold (30), so that heat should not be lost by conduction from the manifold walls.

7. An exhaust system as claimed in any preceding claim, wherein a valve (46) is provided to prevent exhaust gases from entering the reservoir during cold starts and under low load operating conditions.

8. An exhaust system as claimed in claim 7, wherein the valve (46) is an externally controlled butterfly valve.

9. An exhaust valve as claimed in claim 7, wherein the valve (46) is a flap valve that is normally closed and opens automatically as the pressure from the blowdown surges increases.

## Patentansprüche

1. Abgasanlage für eine Brennkraftmaschine mit einem Auspuffrohr (54), wenigstens einer Zweigleitung (32), welche von einer einzelnen Auslaßöffnung (16) des Motors zum Auspuffrohr (54) führt,
**gekennzeichnet durch** ein Gasspeichergefäß (40), das ebenfalls mit der Auslaßöffnung (16) verbunden ist, wobei die Größe des Speichergefäßes (40) und die Verbindung zwischen dem Speichergefäß und der Auslaßöffnung (16) derart ist, daß in dem Speichergefäß (40) der Hauptanteil der Abgase aufgefangen und gespeichert wird, die während jeder Auspuffphase über die Auslaßöffnung (16) entlassen werden, wenn das dieser Auslaßöffnung zugeordnete Motorauslaßventil anfänglich öffnet, wobei die in dem Speichergefäß gespeicherten Abgase anschließend, in einem späteren Stadium des Motorzyklus, zurück zum Auspuffrohr (54) geführt werden, und Mittel (44) zum Entzug von Wärme aus den Abgasen, die vorübergehend im Speichergefäß (40) gespeichert worden sind.

2. Abgasanlage für eine Brennkraftmaschine nach Anspruch 1, worin der Motor eine Mehrzahl von Zylindern hat, und die Abgasanlage einen Auspuffkrümmer (30) mit mehreren Zweigen (36) hat, die jeweils von einer einzelnen Auslaßöffnung (16) eines jeweils entsprechenden Zylinders zum Auspuffrohr (54) führen, wobei ein einziges Gasspeichergefäß (40) gemeinsam an allen Auslaßöffnungen angeschlossen ist, und wobei von einer einzelnen Auslaßöffnung (16) in das Speichergefäß (40) eintretende Abgase anschließend dem Auspuffrohr (54) über einen Zweig des Auspuffkrümmers wieder zugeführt werden, der zu einer anderen Auslaßöffnung führt.

3. Abgasanlage für eine Brennkraftmaschine nach Anspruch 1, worin die Brennkraftmaschine mehrere Zylinder hat, und die Abgasanlage einen Auspuffkrümmer (30) mit mehreren Zweigen (36) hat, worin jede von einer einzelnen Auslaßöffnung (16) eines entsprechenden einen Zylinders zum Auspuffrohr (54) führt, wobei mehrere Speichergefäße (40') vorgesehen sind, wovon jedes an eine entsprechende der Auslaßöffnungen (16) angeschlossen ist, wobei Abgase, die von der zugehörigen Auslaßöffnung her in jedes Speichergefäß (40') eintreten, anschließend über den Zweig (32) des Auslaßkrümmers, der von derselben Auslaßöffnung (16) hinweg führt, zurück in das Auspuffrohr (54) geleitet werden.

4. Abgasanlage nach einem beliebigen der vorangehenden Ansprüche, worin die Mittel (44) zur Abführung von Wärme aus den Abgasen im Speichergefäß ein Wärmetauscher sind.

5. Abgasanlage nach Anspruch 4, worin der Wärmetauscher derart wirksam ist, daß er Wärme an ein flüssiges Kühlmittel abgibt, das in einem Kühlsystem des Motors zirkuliert.

6. Abgassystem nach einem beliebigen der vorangehenden Ansprüche, worin Mittel (48) vorgesehen sind, um das Speichergefäß (40, 40') thermisch von dem Auslaßkrümmer (30) zu isolieren, so daß keine Wärme durch Ableitung durch die Krümmerwände verlorengeht.

7. Abgasanlage nach einem beliebigen der vorangehenden Ansprüche, worin ein Ventil (46) vorgesehen ist, um die Abgase daran zu hindern, während Kaltstartphasen und bei Betrieb mit niedriger Last in das Speichergefäß einzutreten.

8. Abgasanlage nach Anspruch 7, worin das Ventil (46) ein extern gesteuertes Schmetterlingsventil ist.

9. Abgasanlage nach Anspruch 7, worin das Ventil (46) ein Flatterventil ist, das normalerweise geschlossen ist, und das automatisch öffnet, wenn der Druck durch die Auspuffdruckstöße ansteigt.

## Revendications

1. Système d'échappement d'un moteur à combustion interne, comprenant un tuyau d'échappement (54), au moins une tubulure (32) reliant un orifice d'échappement individuel (16) du moteur au tuyau d'échappement (54), **caractérisé par** un réservoir de stockage de gaz (40) également raccordé à l'orifice d'échappement (16), la taille du réservoir (40) et le raccordement entre le réservoir (40) et l'orifice d'échappement (16) étant conçus de façon à capturer et stocker dans le réservoir (40) la majeure partie des gaz d'échappement provenant de l'orifice d'échappement (16) pendant la phase de surpression soudaine de chaque cycle d'échappement lorsque la soupape d'échappement associée à l'orifice d'échappement commence à s'ouvrir, les gaz d'échappement stockés dans le réservoir étant ensuite renvoyés au tuyau d'échappement (54) dans une phase ultérieure du cycle du moteur, et par un moyen (44) permettant d'extraire la chaleur des gaz d'échappement stockés provisoirement dans le réservoir (40).

2. Système d'échappement d'un moteur à combustion interne selon la revendication 1, dans lequel le moteur est doté d'une pluralité de cylindres, et le système d'échappement comprend un collecteur d'échappement (30) muni d'une pluralité de tubulures de dérivation (36) dont chacune relie un orifice d'échappement individuel (16) de l'un des cylindres respectifs au tuyau d'échappement (54), un seul réservoir de stockage de gaz (40) étant raccordé en commun avec tous les orifices d'échappement, et les gaz d'échappement entrant dans le réservoir (40) en provenance d'un orifice d'échappement (16) étant ensuite renvoyés au tuyau d'échappement (54) par une tubulure de dérivation du collecteur conduisant à un autre orifice d'échappement (16).

3. Système d'échappement d'un moteur à combustion interne selon la revendication 1, dans lequel le moteur est doté d'une pluralité de cylindres, et le système d'échappement comprend un collecteur d'échappement (30) muni d'une pluralité de tubulures de dérivation (36) dont chacune relie un orifice d'échappement individuel (16) de l'un des cylindres respectifs au tuyau d'échappement (54), une pluralité de réservoirs de stockage (40') étant présents, chacun étant raccordé à l'un des orifices d'échappement respectifs (16), les gaz d'échappement entrant dans chaque réservoir (40') à partir de l'orifce d'échappement associé étant ensuite renvoyés au tuyau d'échappement (54) par la tubulure de dérivation (32) du collecteur provenant du même orifice d'échappement (16).

4. Système d'échappement selon l'une des revendications précédentes, dans lequel le moyen (44) permettant d'extraire la chaleur des gaz d'échappement stockés dans le réservoir est un échangeur thermique.

5. Système d'échappement selon la revendication 4, dans lequel l'échangeur therrnique transfère la chaleur à un liquide de refroidissement circulant dans un circuit de refroidissement du moteur.

6. Système d'échappement selon l'une des revendications précédentes, dans lequel des moyens (48) sont prévus pour isoler thermiquement le réservoir (40, 40') vis-à-vis du collecteur d'échappement (30) afin que la chaleur ne soit pas perdue par conduction à travers les parois du collecteur.

7. Système d'échappement selon l'une des revendications précédentes, dans lequel un clapet (46) est présent pour empêcher la pénétration des gaz d'échappement dans le réservoir pendant les démarrages à froid et dans des situations de fonctionnement sous faible charge.

8. Système d'échappement selon la revendication 7, dans lequel le clapet (46) est un volet-papillon commandé de l'extérieur.

9. Clapet d'échappement selon la revendication 7, dans lequel le clapet (46) est un clapet à battant qui est normalement fermé et qui s'ouvre automatiquement sous l'action des surpressions soudaines des gaz d'échappement dans le tuyau d'échappement.
